## Europäisches Patentamt
## European Patent Office
## Office européen des brevets

(11) Numéro de publication: **0 046 124**
**A1**

(12)
# DEMANDE DE BREVET EUROPEEN

(21) Numéro de dépôt: **81401295.1**

(22) Date de dépôt: **12.08.81**

(51) Int. Cl.³: **H 02 G 3/00**
**H 02 G 3/16**

(30) Priorité: **13.08.80 FR 8017883**

(43) Date de publication de la demande:
**17.02.82 Bulletin 82/7**

(84) Etats contractants désignés:
**AT BE CH DE GB IT LI LU NL SE**

(71) Demandeur: **EQUIPEMENTS ELECTRIQUES DE QUERCY**
**chez "MAEC", Regourd**
**F-46001 Cahors(FR)**

(72) Inventeur: **Bourrieres, Pierre**
**125 rue de la Barre**
**F-46000 Cahors(FR)**

(74) Mandataire: **Bouju, André**
**38 Avenue de la Grande Armée**
**F-75017 Paris(FR)**

(54) **Système de câblage électrique, boîte de raccordement et dispositif de connexion s'y rapportant.**

(57) Le système de câblage électrique sert à relier un tableau de distribution électrique (7) à des points de consommation tels que lampes (4) ou prises (3). Il comprend une boîte de raccordement (11) destinée à être reliée au tableau de distribution (7) d'une part, et aux points de consommation (3, 4) d'autre part.

Chaque point de consommation (3, 4) est relié à la boîte de raccordement (11) par une gaine individuelle (13) contenant les fils conducteurs correspondants.

Utilisation en particulier pour réaliser des installations électriques précâblées de façon très complète en usine, pour les locaux d'habitation.

FIG. 1

EP 0 046 124 A1

"Système de câblage électrique, boîte de raccordement
et dispositif de connexion s'y rapportant"

La présente invention concerne un système
de câblage électrique, destiné notamment,mais non limitativement aux locaux d'habitation.

L'invention concerne également une boîte
de raccordement, et un dispositif de connexion pour
ce système.

Les systèmes de câblage visés par l'invention
sont du genre permettant un précâblage au moins partiel
en usine de manière à réduire les opérations de pose
sur place.

On connaît des systèmes de câblage électrique
pour relier un tableau de distribution électrique à
des points de consommation tels que lampes ou prises,
comprenant au moins deux ramifications destinées à être
reliées directement au tableau de distribution d'une
part et aux points de consommation d'autre part. Chaque
point de consommation est relié à la ramification par
une gaine individuelle contenant les fils conducteurs
correspondants

Le brevet allemand 762 800 (SIEMENS) décrit
un tel système de câblage. Dans ce système connu, il
est prévu pour chaque pièce d'habitation une ramification
réalisée sous forme d'épissure reliée d'une part au
tableau de distribution desservant l'ensemble de l'appartement et d'autre part, à chaque point d'utilisation
de la pièce concernée.

Ce dispositif connu conduit à un schéma électrique clair de l'installation et permet une préfabrication poussée en usine. En particulier, l'épissure peut
être fabriquée en usine, chaque gaine partant de cette
épissure ayant la longueur voulue déterminée en usine d'après le plan de l'habitation à équiper.

Cependant, ce système de câblage connu présente certains inconvénients. En effet, la réalisation des épissures diffère selon le nombre de points de consommation qu'elles doivent desservir. A cet égard, il est révélateur que le document antérieur n'ait prévu qu'une lampe et qu'une prise dans chaque pièce, ce qui est assez peu réaliste. En outre, les épissures à réaliser sont assez nombreuses. Enfin, ce système connu n'est plus adapté aux réglementations et aux normes actuelles qui imposent que le circuit d'alimentation des lampes soit distinct du circuit d'alimentation des prises.

Le but de l'invention est de remédier à ces inconvénients en réalisant un système de câblage électrique économe en matériel et conforme aux nouvelles réglementations et normes.

Suivant l'invention, le système de câblage est caractérisé en ce que les ramifications comprennent au moins une boîte de raccordement affectée à l'éclairage et au moins une boîte de raccordement affectée aux prises et en ce que chaque boîte de raccordement alimente un nombre optimal de points de consommation compte tenu des possibilités de branchement qu'elle offre, même si ces points de consommation sont répartis dans plusieurs espaces à équiper tels que des pièces d'habitation.

Ainsi, on constate de façon surprenante que malgré le respect des nouvelles normes qui tendent à conduire à la multiplication par deux du nombre de composants utilisés dans une installation, l'invention permet au contraire de diminuer le nombre de ces composants en alimentant de manière commune les points de consommation qui peuvent l'être, même s'ils appartiennent à des pièces d'habitation différentes.

3

L'invention permet en outre, lorsque la construction s'y prête de disposer la boîte de raccordement affectée aux lampes au-dessus du plafond, les lampes étant généralement elles-mêmes suspendues au plafond, et de disposer la boîte de raccordement affectée aux prises sous le sol, celles-ci étant généralement disposées à proximité du sol. On parvient ainsi à une économie supplémentaire portant cette fois-ci sur la longueur des gaines utilisées.

Selon un autre objet de l'invention, la boîte de raccordement, notamment pour faire partie du système de câblage ci-dessus, destinée à contenir un dispositif de connexion raccordant un tableau de distribution à différents points de consommation par l'intermédiaire de fils renfermés dans des gaines, comprenant un corps et un couvercle, est caractérisée en ce qu'elle présente pour l'engagement de l'extrémité des gaines, des ouvertures réalisées dans la masse du matériau constituant le corps, entourées de moyens d'étanchéité et reliées au bord du corps par un passage tel qu'une fente ou un passage plus large.

Le problème que pose la réalisation de ces boîtes de raccordement est d'assurer avec des moyens très sommaires l'étanchéité entre le corps et le couvercle aussi bien que l'étanchéité autour des orifices d'entrée des gaines.

Le problème qui est posé plus particulièrement dans ce second objet de l'invention est encore plus complexe puisqu' on a voulu qu'il soit en outre possible de monter la gaine sur la boîte de raccordement après que les fils munis de la prise de branchement sur la boîte aient été engagés dans ladite gaine.

Pour adapter sur la boîte de raccordement une gaine garnie de fils et d'une prise, on commence par faire passer la partie des fils qui apparaît entre la gaine et la prise par la fente ou le passage plus large. Ainsi, la gaine se trouve à l'extérieur du corps et la prise se trouve à l'intérieur du corps. Ensuite, il suffit d'engager de façon étanche la gaine dans l'ouverture.

Une fois la boîte fermée, la fente à bords serrés assure une étanchéité poussée au béton sous pression et à l'humidité. Si une telle étanchéité n'est pas particulièrement recherchée, un passage plus large est plus pratique au montage.

Selon un troisième objet de l'invention, le dispositif de connexion, destiné notamment à faire partie du système de câblage conforme à l'invention ou à être monté dans une boîte de raccordement du genre précité, comprenant une grille présentant au moins trois rangées de connexions, au moins une prise permettant de raccorder jusqu'à trois fils, chacun à une connexion d'une rangée différente, est caractérisée en ce que les prises comprennent des moyens destinés à maintenir l'extrémité dénudée de chaque fil en position propre à permettre l'enfichage direct de ces extrémités dans la grille.

L'extrémité dénudée du fil remplace les fiches habituelles. L'économie réalisée à la fabrication et au montage est appréciable. Il n'est plus nécessaire d'utiliser des fiches, ni de connecter les fils aux fiches, l'insertion du fil dans la prise suffit.

D'autres particularités et avantages de l'invention résulteront encore de la description ci-après.

Aux dessins annexés, donnés à titre d'exemples non limitatifs:

- la figure 1 est une vue schématique d'une installation, montrant plus particulièrement le système de câblage des prises;

- la figure 2 est une vue de l'installation de la figure 1, mais montrant plus particulièrement le système de câblage des lampes;

- la figure 3 est une vue schématique du dispositif de connexion des prises;

- la figure 4 est une vue schématique du dispositif de connexion des lampes;

- la figure 5 est une vue schématique d'un dispositif de connexion d'une lampe avec points de commande multiples;

- la figure 6 est une vue en élévation latérale de la boîte de raccordement;

- la figure 7 est une vue de dessus de la boîte de la figure 6;

- la figure 8 est une vue en coupe longitudinale de la boîte de la figure 6;

- la figure 9 est une vue du détail IX de la figure 8;

- la figure 10 est une vue partielle en perspective du corps de la boîte selon les figures 6 à 9;

- la figure 11 est une vue partielle d'une variante de la figure 10;

- la figure 12 est une vue partielle en perspective du couvercle de la boîte selon les figures 6 à 9;

- la figure 13 est une vue en perspective avec coupe et arrachement, du dispositif de connexion;

- la figure 14 est une vue partielle en élévation latérale du dispositif de connexion de la figure 13;

      - la figure 15 est une vue partielle du dispositif des figures 13 et 14, en coupe selon XV-XV de la figure 16;

      - la figure 16 est une vue partielle en coupe selon XVI-XVI de la figure 15;

      - les figures 17 et 18 sont des vues en perspective de chacune des pièces constitutives de la prise de la figure 14;  et

      - la figure 19 est une vue en plan de la grille, celle-ci étant retournée et son capot ôté.

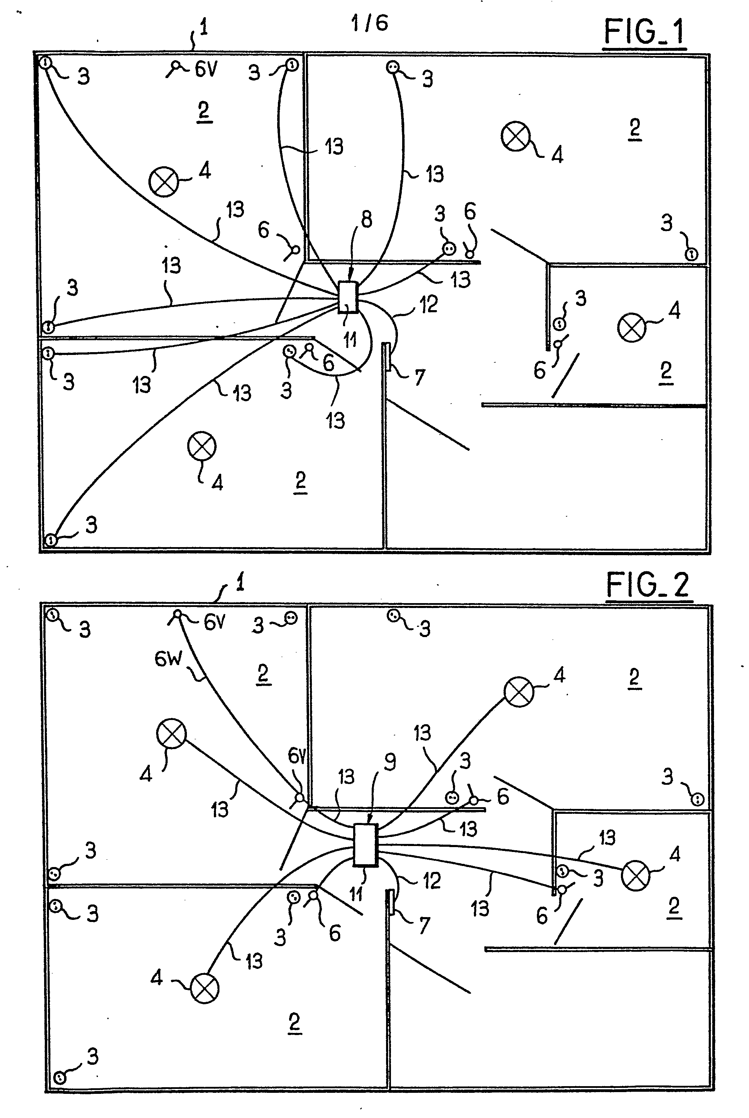

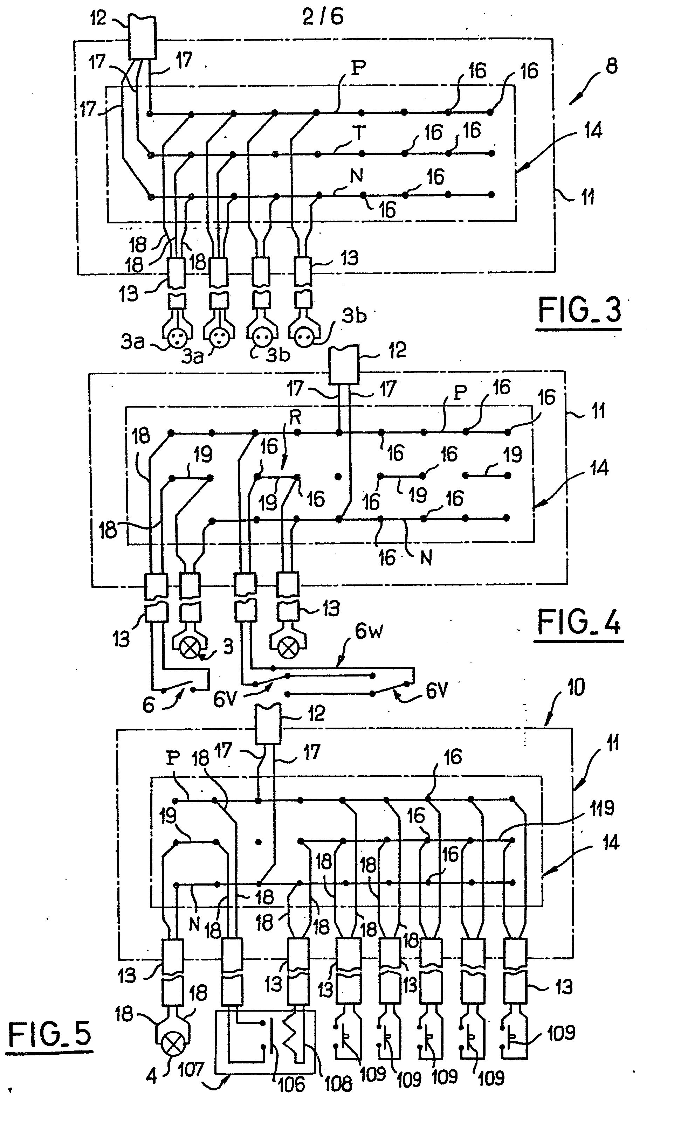

La maison d'habitation 1 représentée en plan aux figures 1 et 2 comprend différentes pièces 2 dans lesquelles sont prévues un certain nombre de prises de courant 3 et de lampes 4 appelées ci-après d'une manière générale "points de consommation".  Chaque lampe est associée à un interrupteur 6, sauf une qui est commandée par un dispositif de va-et-vient comprenant deux interrupteur 6v reliés par une liaison électrique 6w. L'ensemble doit être alimenté à partir d'un tableau de distribution 7.

L'installation comprend un système de câblage 8 pour les prises et un système de câblage 9 pour les lampes. Dans un but de clarté, le système 9 n'a pas été représenté sur la figure 1 ni le système 8 sur la figure 2. En outre, compte tenu du nombre de prises 3, un troisième système non représenté, mais analogue au système 8, est nécessaire pour alimenter certaines prises non desservies par le système 8.

Le système de câblage 8 (circuit des prises de courant avec ou sans terre) comprend une boîte de raccordement 11 offrant neuf possibilités de branchement, reliée directement au tableau 7 par une gaine 12 renfermant deux, ou le plus souvent trois fils (un pour la phase, un pour le neutre et un pour la terre) qui utilisent l'une des possibilités de branchement de la boîte 11.

Bien que n'appartenant pas toutes à la même pièce 2, huit des prises 3 sont reliées à la boîte de raccordement 11 par une gaine individuelle 13 qui contient deux ou trois fils conducteurs selon que la prise comprend ou non une borne de terre.

Comme le montre schématiquement la figure 3, le boîtier 11 renferme un dispositif de connexion 14 présentant trois rangées de/points de connexion 16 (neuf) tous reliés entre eux électriquement dans chacune des rangées. Chacun des trois fils 17 de la gaine 12 est relié à un point de connexion 16 de l'une des rangées de manière à définir une rangée P pour la phase, une rangée N pour le neutre et, au milieu, une rangée T pour la terre.

Les prises avec borne de terre (prises 3a) sont desservies par une gaine 13 renfermant trois fils 18 reliés chacun à l'une des rangées P, N, T. Au contraire, les prises 3b sans borne de terre ne sont reliées qu'aux rangées P et N.

Le système de câblage 9 (circuit d'éclairage) (figure 2), comprend comme le système 8 une boîte de raccordement 11 reliée/au tableau 7 par une gaine 12. (directement)

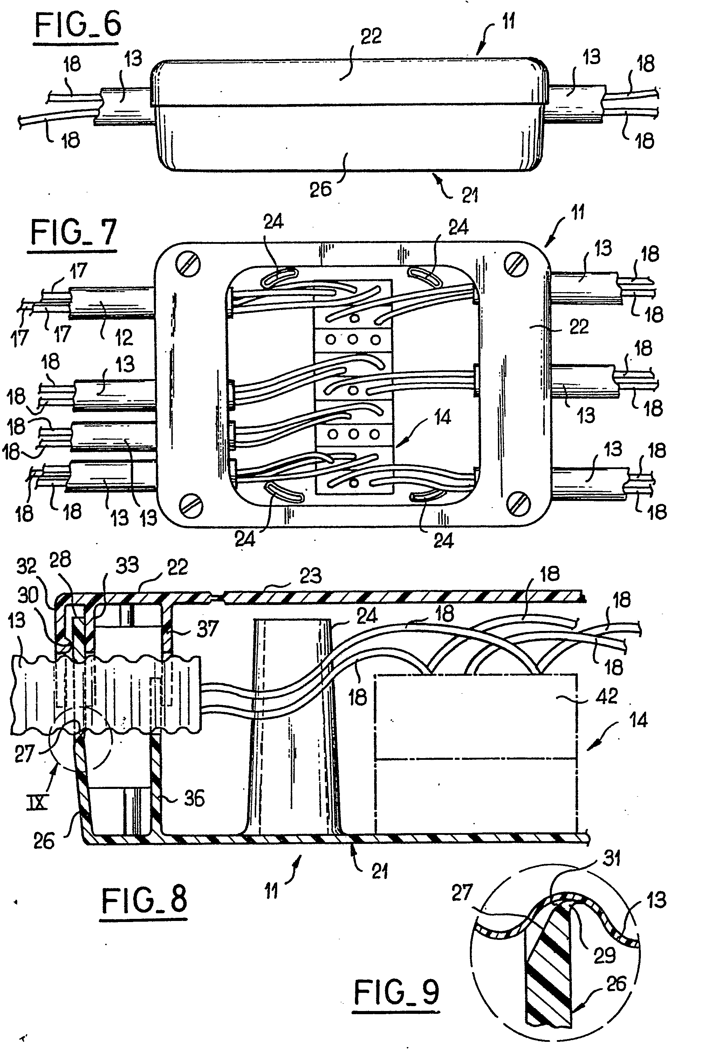

Comme le montre la figure 4, la gaine 12 ne renferme qu'un fil 17 pour la phase et un pour le neutre. Les fils 17 sont reliés chacun à une rangée P ou N de points de connexion 16 faisant partie du dispositif de connexion 14 contenu dans la boîte 11.

Ce dispositif 14 comprend également une troisième rangée R de points de connexion 16 reliés deux à deux électriquement par des barrettes-relais 19. Les lampes 4 sont reliées à la boîte 11 par (quatre) des gaines 13 renfermant deux fils 18 connectés l'un à la rangée N, l'autre à l'une des barrettes-relais 19.

Les bornes des interrupteurs 6 et du dispositif de va-et-vient 6v, 6w sont reliées dans chaque cas à la rangée P et à la même barrette-relais 19 que la lampe 4 associée. Ainsi, chaque lampe 4 utilise deux possibilités de branchement de la boîte 11 car elle n'est reliée à son interrupteur 6 ou à son dispositif de va-et-vient 6v, 6w que par la boîte de raccordement 11. Il part donc de cette dernière une gaine individuelle 13 vers chaque lampe 4, interrupteur 6 ou dispositif de va-et-vient 6v, 6w.

Quand on ferme un interrupteur 6 ou le dispositif de va-et-vient 6v, 6w, la barrette-relais 19 correspondante est reliée électriquement avec la phase, de sorte que la lampe 4 concernée, branchée entre cette barrette-relais 19 et le neutre, s'allume.

Comme représenté à la figure 5, l'invention est également applicable à la réalisation d'un système de câblage 10 dans lequel une lampe 4 doit pouvoir être commandée à partir d'un grand nombre d'emplacements.

Dans cette application, le dispositif 14 comprend sur une rangée médiane de points de connexion 16, une barrette-relais 19 reliant deux points de connexion 16 et une barrette-relais 119 reliant six autres points 16.

Comme dans la réalisation de la figure 4, la lampe 4 est branchée entre la rangée N et la barrette-relais 19.

Le contact 106 d'un relais électrique 107 est branché entre cette barrette-relais 19 et la rangée P. Le bobinage 108 du relais 107 est relié d'une part, à la rangée N et d'autre part, à la barrette-relais 119, qui est elle-même reliée à la rangée P par l'intermédiaire de cinq contacts 109 à bouton-poussoir, montés en parallèle.

Quand on appuie sur l'un des boutons-poussoirs 109, le bobinage 108 est alimenté et le contact 106 du relais 107 se ferme, provoquant l'allumage de la lampe.

On conçoit aisément que les systèmes de câblage 8, 9, 10 se prêtent à un précâglage très poussé en usine, surtout si l'on connaît le schéma électrique d'une habitation et la position des points à desservir dans l'appartement. Il est alors possible de livrer sur le chantier l'ensemble des systèmes de câblage nécessaires, prêts à être posés, avec la longueur de gaine et de fil adéquate pour relier à la boîte 11 chaque point à desservir. Comme l'invention permet de supprimer pratiquement toute liaison électrique ne passant pas par les boîtes 11, le montage sur place se limite à installer les boîtes 11 et à relier l'autre extrémité des gaines 12, 13 au tableau 7 ou aux différents points à desservir (3, 4, 6, 6v, 106, 108, 109).

Bien souvent, les systèmes 8, 9, 10, y compris les boîtes 11, sont noyés dans le béton armé des murs après avoir été fixés aux ferrailles qui le renforcent. Dans d'autres cas (greniers, caves), on fixe les systèmes 8, 9, 10 contre les murs. Les boîtes 11 doivent donc être étanches au béton sous pression, mais aussi à la pluie à laquelle elles sont susceptibles d'être exposées pendant le chantier.

On va maintenant décrire, en référence aux figures 6 à 12, une boîte de raccordement particulièrement appropriée à faire partie du système de câblage décrit ci-dessus tout en offrant une excellente étanchéité au béton et à l'eau.

La boîte 11 est sensiblement rectangulaire et comprend un corps 21 et un couvercle 22 destiné en service à être vissé sur le corps 21. A l'origine, le couvercle 22 est hermétique. Sa partie centrale 23 est cependant détachable. Ainsi, une fois la boîte 11 noyée à ras de la paroi du mur, on peut détacher cette partie centrale 23 comme représenté figure 6 et fermer la boîte 11 par une plaque de propreté non représentée. Des puits 24, (figure 7) destinés au vissage de la plaque de propreté, ont une section allongée en arc de cercle pour permettre de redresser la plaque de propreté même si la boîte 11 est un peu de travers dans le mur.

Sur deux faces opposées, la paroi latérale 26 du corps 21 présente cinq ouvertures alignées 27 le long du bord supérieur 28 de ce corps 21. Les ouvertures 27 sont destinées à recevoir de façon étanche les gaines 12 ou 13 reliant la boîte 11 au tableau 7 ou aux points à desservir. Les fils 17 ou 18 sont reliés au dispositif de connexion 14 qui sera détaillé plus loin.

Les ouvertures 27 (figure 9) sont tronconiques de telle manière que leur section se rétrécit de l'extérieur vers l'intérieur de la boîte 11 Cette conicité définit une lèvre 29 réalisée dans la masse du corps 21 de la boîte 11, qui est réalisée en matière plastique douée d'une certaine élasticité. Le diamètre interne de la lèvre 29 est inférieur au diamètre extérieur des gaines 12, 13, de sorte que les gaines 12, 13 ne peuvent pénétrer dans les ouvertures 27 que par déformation de la lèvre 29.

Dans le cas de gaines 12, 13 ondulées (figures 8 et 9) le diamètre intérieur de la lèvre 27 est inférieur au diamètre extérieur de la gaine mesuré au fond 31 des ondulations. La lèvre 29 se place d'elle-même dans le fond 31 d'une ondulation et assure l'étanchéité autour de la gaine 13 tout en opposant une certaine résistance à l'arrachage de la gaine 13.

Le couvercle 22 présente sur tout son pourtour deux parois latérales parallèles 32 et 33 entre lesquelles est enserré le bord 28 du corps 21 quand le couvercle 22 est fermé.

En outre, la proi externe 32 présente une nervure d'appui 30 dirigée vers la paroi interne 33 de manière à renforcer l'étanchéité entre le corps 21 et le couvercle 22.

Le bord des deux parois parallèles 32 et 33 présente des encoches semi-circulaires 34 en regard des ouvertures 27, de manière à laisser celles-ci libres pour l'engagement des gaines 12 ou 13.

Grâce à ces encoches 34, les parois 32 et 33 du couvercle 22 peuvent recouvrir une bonne partie de la paroi latérale 26 de la boîte sans que les ouvertures soient réalisées au fond de la boîte 11, ce qui serait gênant pour le montage des gaines 12, 13 et le raccordement des fils 17, 18 au dispositif 14.

Derrière chacune des deux faces de la paroi 26 munies d'ouvertures 27, le corps 21 et le couvercle 22 portent une cloison respectivement 36 ou 37 parallèle aux ouvertures 27. La cloison 36 est légèrement décalée vers les ouvertures 27 par rapport à la cloison 37 de sorte qu'une fois le couvercle 22 fermé, les deux cloisons 36 et 27 sont en appui latéral l'une sur l'autre.

En face de chaque ouverture 27, ces cloisons 36, 37 présentent des encoches 38, 39 de sorte que l'extrémité de chaque gaine 12 où 13 est enserrée entre une encoche 38 et une encoche 39 qui coopèrent avec l'ouverture 27 pour fixer la gaine 12 ou 13 à la boîte, perpendiculairement à la paroi 26.

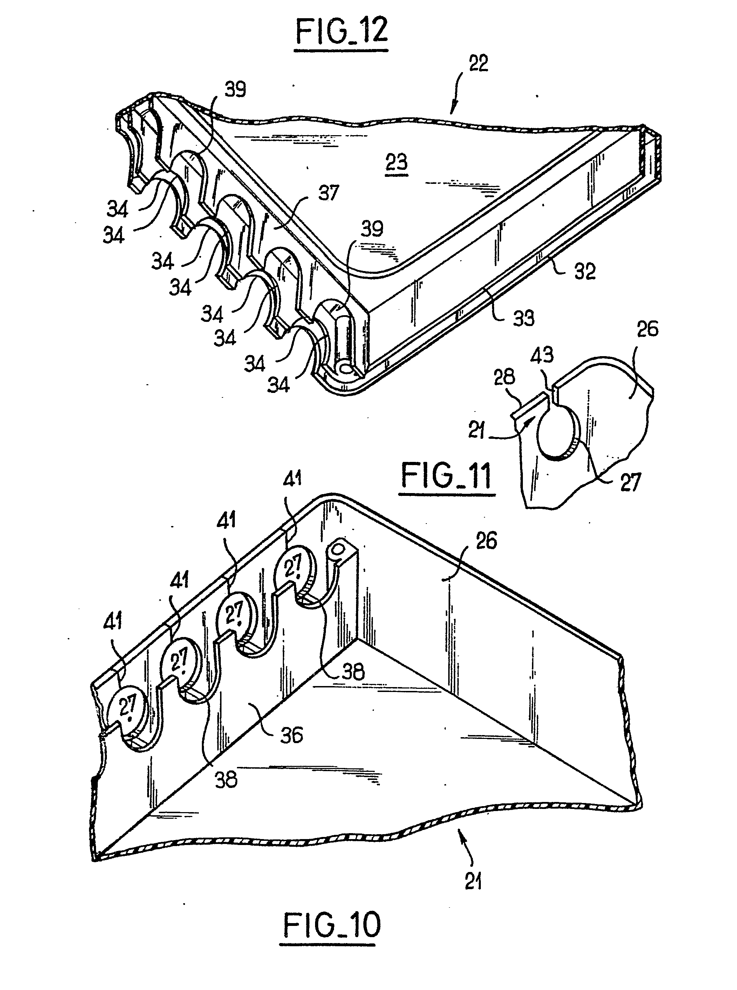

Selon une particularité de l'invention, chaque ouverture 27 est reliée au bord 28 du corps 21 par une fente 41 (figure 10). Ainsi, pour monter le système de câblage, on engage les fils 17 ou 18 dans les gaines 12 ou 13, puis on fixe aux fils 17 ou 18 une prise 42 qui fait partie du dispositif de connexion 14 et qui sera décrite en détail plus loin, on fait entrer les fils 17 ou 18 dans l'ouverture 27 par la fente 41, puis on engage la gaine 12 ou 13 dans l'ouverture 27 et on la pose dans une encoche 38 du corps 21.

Selon une variante (figure 11) employée lorsqu'il n'est pas nécessaire que la boîte 11 soit étanche compte tenu de l'utilisation prévue, la fente 41 est remplacée par un passage 43 plus large.

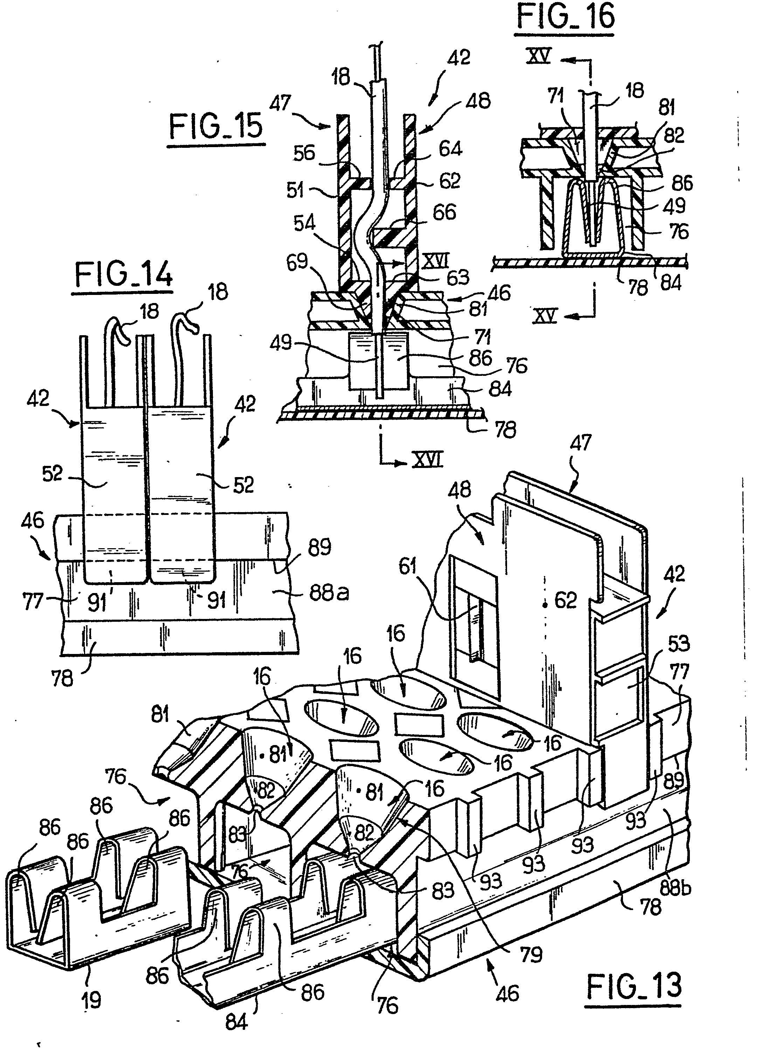

Comme le montrent les figures 13 à 19, le dispositif de connexion 14 comprend d'une part une grille 46 portant trois rangées de neuf points de connexion 16, et d'autre part une série de prises 42 adaptables à la grille 46 transversalement aux rangées de points de connexion 16. Chaque prise 42 est destinée à relier les deux ou trois fils 17 ou 18 sortant d'une même gaine 12 ou 13 chacun à un point 16 respectif de l'une des trois rangées de points 16.

Les prises 42 comprennent deux parties 47, 48 entre lesquelles le fil 17 ou 18 est inserré de manière que son extrémité dénudée 49 fasse saillie de la partie inférieure de la prise.

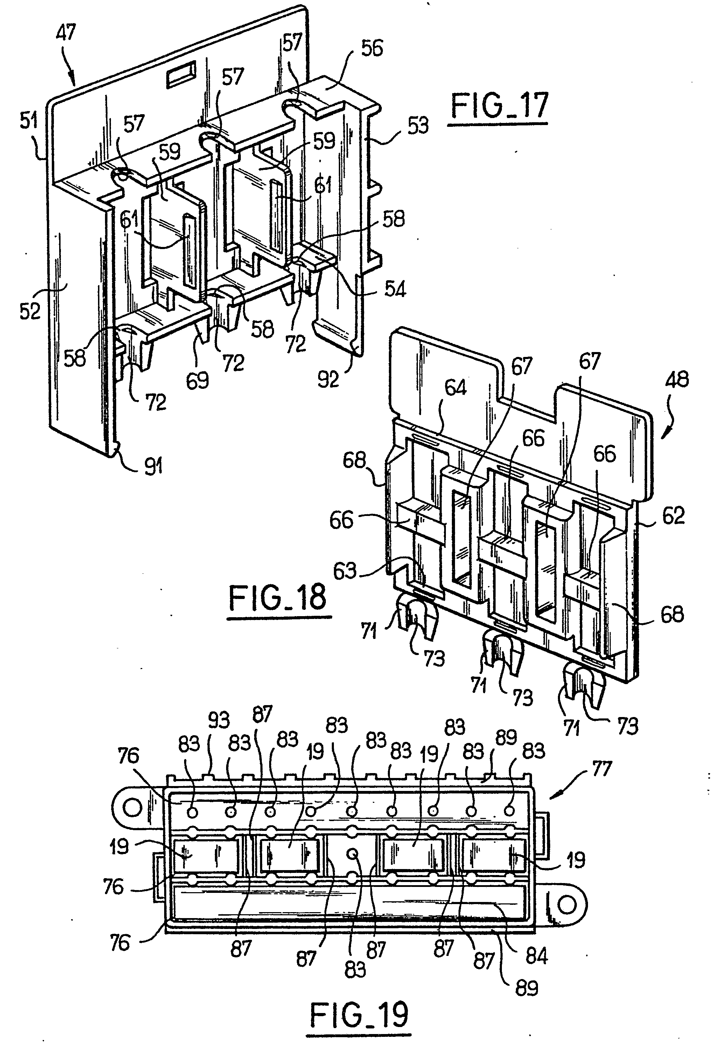

La partie 47 (figure 17) présente une paroi latérale 51, deux parois d'extrémité opposées 52 et 53 perpendiculaires à la paroi 51, et deux parois inférieure 54 et supérieure 56, toutes deux perpendiculaires aux parois 51, 52, 53. La paroi 56 présente des encoches 57 pour l'entrée des fils 17 ou 18, et la paroi 54 présente des encoches 58 pour permettre à l'extrémité dénudée 49 des fils 17 ou 18 de faire saillie. Les encoches 57, 58 ont chacune deux bords parallèles reliés par un fond semi-circulaire, et leur profondeur est telle que les fils 17 ou 18 peuvent s'y loger complètement moyennant un léger serrage. L'espace intérieur de la partie 47 est divisé en trois par deux cloisons 59 parallèles aux parois 52, 53 et portant des becs d'encliquetage 61.

L'autre partie 48 (figure 18) des prises
42 comprend une paroi latérale 62, et des parois inférieure 63 et supérieure 64 montées en service dans le prolongement des parois inférieure et supérieure 54 et 56
de la partie 47, de manière à emprisonner les fils 17
ou 18 dans les encoches 57 et 58.

Trois chicanes 66 ménagées à mi-chemin entre
les parois 63 et 64 font saillie au-delà de l'extrémité
de celles-ci vers la paroi 51 de la partie 47 de manière
à assurer un parcours sinueux aux fils 17 et 18 entre
les encoches 57, 58 (figure 15).

Entre les chicanes 66 sont réalisées des
ouvertures rectangulaires 67 propres à recevoir les
becs d'encliquetage 61. De chaque côté de la paroi
latérale 62, des rampes 68, dirigées en service obliquement vers la paroi latérale 51 de la partie 47, permettent
l'insertion aisée de la partie 48 entre les parois 52
et 53 de la partie 47.

En outre, les parois inférieures 54 (figure
17) et 63 (figure 18), portent chacune trois demi-cônes
69, 71 présentant un évidement axial hémicylindrique
72, 73 respectivement. Quand la prise 42 est assemblée,
chaque couple de demi-cônes 71, 72 constitue un cône
convexe avec un conduit axial traversé par le fil 17
ou 18 dont l'extrémité dénudée 49 débouche au sommet
de ce cône.

Les évidements 72 sont chacun dans le prolongement du fond d'une encoche 58, et les demi-cônes 71
de la partie 48 sont décalés par rapport au bord de
la paroi 63 en direction de la paroi latérale 51 de
la partie 47.

14

La grille 46 comporte trois tunnels longitudinaux 76 creusés à la partie inférieure d'un corps 77 de la grille 46 et fermés par un capot 78 de celle-ci. Des évidements coniques 79 sont ménagés dans le corps 77 pour donner accès aux tunnels 76 à partir de la face supérieure de la grille 46 à chaque point de connexion 16.

La partie supérieure 81 des évidements 79 a une conicité indentique à celle des demi-cônes 69, 71 des prises 42. Par contre, la conicité de leur partie inférieure 82 est plus prononcée et sert à guider l'extrémité 49 du fil 17 ou 18 vers un goulet 83 par lequel elle fait, en service, saillie dans le tunnel 76.

Les tunnels 76 renferment des barrettes. Dans l'exemple représenté, destiné à un système de câblage pour lampes, les deux tunnels 76 latéraux renferment une barrette 84 qui occupe toute leur longueur, tandis que le tunnel 76 central renferme une série de barrettes-relais 19.

Les barrettes 84 ont un profil en U dont les bras sont dirigés vers les prises 42.

A intervalle régulier équivalent à celui séparant deux goulets 83 successifs d'une même rangée, les deux bras du U sont prolongés par deux ailes 86 dirigées vers l'évidement 79, puis recourbées sensiblement à 180° l'un vers l'autre.

Les barrettes-relais 19 ont le même profil que les barrettes 84, mais leur longueur est telle qu'elles ne présentent que deux paires d'ailes 86 chacune.

Comme le montre la figure 19, dans laquelle la barrette 84 supérieure a été ôtée, les barrettes-relais 19 sont montées chacune au droit de deux goulets 83 respectifs de la rangée centrale, et des nervures 87 ménagées uniquement dans le tunnel 76 central maintiennent les barrettes-relais 19 dans cette disposition. Le goulet 83 central n'est associé à aucune barrette-relais 19 car les deux goulets 83 qui lui correspondent dans les autres rangées sont destinés à être associés aux fils 17 provenant du tableau de distribution 7. Néanmoins, le goulet central 83 est utile lorsque la grille 46 est utilisée dans un système de câblage 8 pour des prises telles que 3 (figure 1). Ceci est possible car les nervures 87 sont de taille suffisamment réduite pour permettre l'installation d'une barrette 84 dans le tunnel 76 central.

Les faces latérales 88a, 88b du corps 77 de la grille 46 présentent chacune un épaulement 89 dirigé vers le capot 78. Ces épaulements 89 sont destinés à coopérer avec des becs d'encliquetage 91, 92 dirigés l'un vers l'autre à la base des parois d'extrémité 52 et 53 de la partie 47 des prises 42.

Entre l'épaulement 89 et la face supérieure de la grille 46, la face 88b porte des saillies 93 perpendiculaires à l'épaulement 89. Par ailleurs, la paroi latérale 53 de la partie 47 est rétrécie à partir de la paroi inférieure 54 jusqu'au bec 92, de sorte qu'elle peut être insérée entre deux saillies 93, ce qui n'est pas le cas de la paroi 52.

En service, la grille 46 est fixée au fond et au milieu de la boîte de raccordement 11, avec les barrettes 19, 84 parallèles aux parois de la boîte 11 qui portent les ouvertures 27.

Les fils 17 ou 18 reliés aux prises et montés dans leur gaine 12 ou 13 sont installés dans la boîte 11 comme indiqué ci-dessus, puis les prises 42 sont enfichées dans la grille 46 avec chaque fil 17 ou 18 inséré entre deux ailes 86 d'une barrette 19 ou 84.

De préférence, on a reporté sur chaque gaine 12 ou 13 une indication concernant l'ouverture 27 dans laquelle elle doit être engagée et une indication concernant la position que doit avoir la prise 42 associée, sur la grille 46. Grâce aux saillies 93, aucune erreur de branchement par retournement de la prise 42 n'est possible même si la gaine 12 ou 13 ne contient que deux fils 17 ou 18.

Une fois l'ensemble ainsi monté, les chicanes 66, qui imposent aux fils 17 ou 18 un parcours sinueux dans la prise 42, assurent à la réalisation une bonne résistance à l'arrachage des fils hors de la prise 42. D'autre part, les becs d'encliquetage 91, 92 fixent les prises 42 à la grille 46 également avec une bonne résistance à l'arrachage.

Par contre, les extrémités 49 enserrées entre deux lames 86 assurent simplement le contact électrique fil-barrette. La structure des barrettes 19, 84 est avantageuse si l'utilisation de fils de diamètres variés est envisagée.

Quand la grille 46, toutes les gaines 12, 13 et toutes les prises 42 sont montées, on ferme le couvercle 22 de la boîte 11.

Tout l'assemblage qui vient d'être décrit peut être réalisé en usine et le système de câblage 8, 9 peut n'être livré au client qu'à ce stade avancé d'assemblage. L'installation du système dans les locaux est ensuite très simple puisqu'il suffit de fixer la boîte 11 et les gaines 12 ou 13 à la structure des locaux, puis de relier chaque extrémité de gaines à un point à desservir bien déterminé.

Cette méthode est avantageuse si les plans de l'installation sont communiqués à l'usine. Cependant, le système conforme à l'invention se prête très bien à la vente sous forme d'éléments semi-assemblés, et, là aussi, l'installateur voit son travail grandement facilité.

Selon une forme préférée, ces éléments semi-assemblés peuvent être:

- des boîtes de raccordement telles que 11;

- deux sortes de grilles, selon que leur tunnel central renferme des barrettes-relais 19 ou une barrette 84;

- quatre sortes d'ensembles prise-gaîne-fils, selon que ces ensembles sont destinés à être branchés sur les trois rangées de points de connexion 16, ou sur l'une des trois combinaisons de deux rangées.

Les grilles ou les prises peuvent être repérées par des signes distinctifs ou des couleurs selon la sorte à laquelle elles appartiennent.

On comprend donc que l'ensemble des éléments décrits coopèrent pour faciliter le montage à tous les stades, que ce soit en usine ou sur le chantier.

Le nombre de constituants est très réduit, notamment du fait de l'étanchéité sans joints et des contacts de prises sans fiches. Le dispositif de connexion permet de donner à la boîte une épaisseur très réduite, ce qui est important notamment si celle-ci doit être enchassée dans un mur.

La boîte de raccordement est un produit industriel nouveau et le système de raccordement constitue une utilisation de ce produit.

Bien entendu, l'invention n'est pas limitée aux exemples représentés, et de nombreux aménagements peuvent être apportés à ces exemples sans sortir du cadre de l'invention.

C'est ainsi que l'invention pourrait être appliquée à toute installation électrique dans laquelle

18

de nombreux points sont à desservir à partir d'un point d'alimentation central.

D'autre part, il est clair que l'invention peut n'être appliquée que sur une partie d'une installation dont le reste serait réalisé de manière traditionnelle.

Dans l'exemple des figures 1 et 2, l'habitation comprend 10 prises 3. Comme huit ont été branchées à la boîte 11, ce qui correspond au nombre maximal de possibilités de branchement qu'offre cette boîte, deux prises 3 seulement devront être branchées sur la boîte 11 de l'autre système 8 qui n'a pas été représenté. Bien entendu, on aurait pu par exemple choisir de brancher cinq prises 3 à la boîte 11 de chacun des deux systèmes 8, sans sortir du cadre de l'invention. La répartition choisie tient généralement compte de la disposition des locaux à équiper.

Dans l'exemple de la figure 10, le plan des fentes 41 est perpendiculaire au plan de la paroi latérale 26 à l'endroit où ces fentes sont pratiquées. On peut cependant avantageusement prévoir que le plan des fentes 41 soit oblique par rapport au plan de la paroi 26. Ainsi, lorque la boîte 11 est fermée, les parois 32 et 33 du couvercle 22, qui enserrent la paroi 26 tendent à refermer les fentes 41 et parfont ainsi l'étanchéité de la boîte.

19

## REVENDICATIONS

1. Système de câblage électrique pour relier un tableau de distribution électrique (7) à des points de consommation tels que lampes (4) ou prises (3) comprenant au moins deux ramifications (11) destinées à être reliées directement au tableau de distribution (7) d'une part, et aux points de consommation (3, 4) d'autre part, dans lequel chaque point de consommation est relié à la ramification par une gaine individuelle (13) contenant les fils conducteurs (18) correspondants, caractérisé en ce que les ramifications comprennent au moins une boîte de raccordement (11) affectée à l'éclairage (4) et une boîte de raccordement (11) affectée aux prises (3), et en ce que chaque boîte de raccordement (11) alimente un nombre optimal de points de consommation (3, 4) compte tenu des possibilités de branchement qu'elle offre, même si ces points de consommation sont répartis dans plusieurs espaces à équiper tels que des pièces d'habitation (2).

2. Système de câblage conforme à la revendication 1, caractérisé en ce que la boîte (11) renferme des points de branchement (16) sur une phase et un neutre, ainsi que sur au moins deux barrettes-relais (19, 119), l'une (19) étant reliée à la phase (P) par le contact d'un relais (107) et au neutre (N) par un dispositif d'éclairage (4) l'autre barrette-relais (119) étant reliée à la phase (P) par un certain nombre de contacts de commande (109) montés en parallèle, et au neutre (N) par le bobinage (108) du relais (107).

3. Système de câblage conforme à l'une des revendications 1 ou 2, caractérisé en ce que la boîte renferme une grille (46) présentant trois rangées de points de connexions (16) et une série de prises (42) munies de moyens (57, 58, 69, 71, 72, 73) pour brancher trois fils (17, 18) chacun sur un point de connexion (16)

de l'une des rangées, et en ce que les prises (42) comportent des moyens (93) pour que chacun des trois fils (17, 18) ne puisse être associé qu'à une rangée de points de connexion (16) bien déterminée.

4. Système de câblage conforme à la revendication 3, destiné notamment à être partiellement assemblé sur le chantier, caractérisé en ce que les prises présentent un signe distinctif permettant de savoir si elles sont branchées sur les trois rangées de points de connexion (16), ou sur l'une des trois combinaisons possibles de deux rangées.

5. Boîte de raccordement, notamment pour faire partie du système de câblage conforme à l'une des revendications 1 à 4, destinée à contenir un dispositif de connexion (14) raccordant un tableau de distribution (7) à différents points de consommation (3, 4) par l'intermédiaire de fils (17, 18) renfermés dans des gaines (12, 13), comprenant un corps (21) et un couvercle (22), caractérisée en ce qu'elle présente pour l'engagement de l'extrémité des gaines (12, 13) des ouvertures (27) réalisées dans la masse du matériau constituant le corps (21), entourées de moyens d'étanchéité (29) et reliées au bord (28) du corps (21) par un passage tel qu'une fente (41) ou un passage plus large (43).

6. Boîte conforme à la revendication 5, caractérisée en ce que pour l'emboîtement du corps (21) avec le couvercle (22), l'un (21) comporte une paroi (26) dont le bord (28) est enserré entre deux parois (32, 33) sensiblement parallèles de l'autre (22) quand la boîte (11) est fermée.

7. Boîte conforme à la revendication 6, caractérisée en ce que l'une des parois parallèles (32) présente une nervure d'appui (30) ménagée sur sa face dirigée vers l'autre paroi parallèle (33).

8. Boîte conforme à l'une des revendications 5 à 7, caractérisée en ce que le bord du couvercle (22) présente des encoches (34) destinées à laisser libre les ouvertures (27) pour les gaines (12, 13) qui sont réalisées dans la paroi du corps (21).

9. Boîte conforme à l'une des revendications 5 à 8, caractérisée en ce que pour positionner les gaines (12, 13) perpendiculairement à la paroi du corps (21), la boîte (11) comprend deux cloisons (36, 37) fixées l'une au couvercle (22), l'autre au corps (21) parallèlement aux ouvertures (27), ces cloisons (36, 37) présentant des encoches (38, 39) réalisées de manière que les extrémités des gaines (12, 13) sont emprisonnées entre une encoche (38) de la cloison (36) du corps (21) et une encoche (39) de la cloison (37) du couvercle (22) quand celui-ci est fermé.

10. Dispositif de connexion destiné notamment à faire partie du système de câblage conforme à l'une des revendications 1 à 4 ou à être monté dans une boîte de raccordement conforme à l'une des revendications 5 à 9, comprenant une grille (46) présentant au moins trois rangées de points de connexion (16), au moins une prise (42) permettant de raccorder jusqu'à trois fils (17, 18), chacun à une connexion (16) d'une rangée différente, caractérisé en ce que les prises (42) comprennent des moyens (57, 58, 66, 69, 71, 72, 73) destinés à maintenir l'extrémité dénudée (49) de chaque fil (17, 18) en position propre à permettre l'enfichage direct de cette extrémité (49) dans la grille (46).

11. Dispositif conforme à la revendication 10, caractérisé en ce que les prises (42) sont réalisées en deux parties (47, 48) encliquetées entre lesquelles les fils (17, 18) sont insérés en position de service, et en ce que, au titre des moyens pour maintenir l'extrémité dénudée (49) de chaque fil (17, 18), chaque fil sort de la prise (42) par un orifice dont chaque moitié sensiblement hémicylindrique (72, 73) est portée par l'une des parties de la prise (47, 48), cet orifice entourant le fil (17, 18) juste en deçà de sa partie dénudée (49) qui fait saillie hors de la prise (42).

12. Dispositif conforme à l'une des revendications 10 ou 11, caractérisé en ce qu'il comprend des moyens (91, 92) de fixation des prises (42) sur la grille (46).

13. Dispositif conforme à la revendication 12, caractérisé en ce qu'en service, les prises (42) sont encliquetées sur la grille (46).

14. Dispositif conforme à l'une des revendications 10 à 13, caractérisé en ce que la grille renferme des barrettes de connexion (19, 84) comportant, au moins en regard de chaque point de connexion (16), deux ailes (86) dirigées vers l'entrée (81) pour la prise (42), puis recourbées l'une vers l'autre sensiblement à 180°.

15. Dispositif conforme à l'une des revendications 10 à 14, caractérisé en ce que les prises (42) présentent des cônes convexes (69, 17) percés par le sommet desquels sort l'extrémité des fils (17, 18) destinée à s'engager dans la prise (42), ces cônes convexes étant destinés à s'emboîter dans des évidements coniques (81) réalisés dans la grille (46) à chaque point de connexion (16).

**FIG_1**

**FIG_2**

*FIG. 3*

*FIG. 4*

*FIG. 5*

2/6

0046124

FIG_6

FIG_7

FIG_8

FIG_9

FIG_12

FIG_11

FIG_10

FIG_14

FIG_15

FIG_16

FIG_13

FIG_17

FIG_18

FIG_19

**0046124**

Numéro de la demande

Office européen
des brevets

**RAPPORT DE RECHERCHE EUROPEENNE**

EP 81 40 1295

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.³) |
|---|---|---|---|
| | FR - A - 1 133 055 (DEYRAIL)<br>* Page 2, colonne de gauche, alinéas 4,5; figure 5 *<br><br>-- | 1 | H 02 G 3/00<br>3/16 |
| | FR - A - 2 311 433 (KAISER)<br>* Page 6, ligne 28 - page 7, ligne 5 *<br><br>-- | 1 | |
| | FR - A - 2 353 978 (FABRELEC)<br>* Page 2, ligne 37 - page 3, ligne 37; figure 1,2 *<br><br>-- | 1 | **DOMAINES TECHNIQUES RECHERCHES (Int. Cl.³)** |
| | DE - C - 942 572 (SIEMENS)<br>* Page 2, lignes 84-97, 109-112 *<br><br>-- | 1 | H 02 G 3/00<br>3/08<br>3/16 |
| | FR - A - 2 305 873 (VIODE)<br>* Page 2, lignes 26-36; page 3, lignes 7-25; page 4, lignes 2-14; page 5, lignes 5-38; page 6, lignes 1-14; figure 13 *<br><br>-- | 1-3,5, 6,10-14 | |
| D | DE - C - 762 800 (SIEMENS)<br>* Page 2, lignes 40-54; figure 1 *<br><br>-- | 1 | **CATEGORIE DES DOCUMENTS CITES** |
| | BE - A - 816 045 (GARDY)<br>* Page 3, alinéa 5; figure 1 *<br><br>--         ./. | 2 | X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons |

&: membre de la même famille, document correspondant

Le présent rapport de recherche a été établi pour toutes les revendications

| Lieu de la recherche | Date d'achèvement de la recherche | Examinateur |
|---|---|---|
| La Haye | 09-11-1981 | TIELEMANS |

OEB Form 1503.1   06.78

Office européen
des brevets

**RAPPORT DE RECHERCHE EUROPEENNE**

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendica-tion concernée | |
| | CH - A - 410 101 (AMMER) <br><br> * Page 2, lignes 30-40; figure 4 * <br><br> -- <br><br> FR - A - 1 551 840 (ELECTRO-MECANIQUE) <br><br> * Page 1, colonne de droite, dernier alinéa; figure 5 * <br><br> -- <br><br> US - A - 3 922 478 (PERKEY) <br><br> * Colonne 3, lignes 16-68; fi-gures 1,6,7 * <br><br> ---- | 5 <br><br><br><br><br> 6 <br><br><br><br><br><br> 14 | <br><br><br><br><br><br><br><br><br><br><br> **DOMAINES TECHNIQUES RECHERCHES (Int. Cl. ³)** |